# EUROPEAN PATENT APPLICATION

(11) **EP 4 600 912 A1**
(43) Date of publication of application: **13.08.2025**
(21) Application number: 23886192.6
(22) Date of filing: 30.10.2023
(51) Int. Cl.: G06T 15/50, G06T 7/90, G06T 7/70, G06T 11/60, G06F 3/0488

(54) **ELECTRONIC DEVICE AND METHOD FOR PROVIDING MULTIPLE VIRTUAL LAMPS**

(30) Priority: 01.11.2022 KR 20220144091; 06.12.2022 KR 20220169142
(71) Applicant: Samsung Electronics Co., Ltd., Suwon-si, Gyeonggi-do 16677 (KR)
(72) Inventor: HYUN, Daeyoung, Suwon-si Gyeonggi-do 16677 (KR); PARK, Jiyoon, Suwon-si Gyeonggi-do 16677 (KR); JEONG, Hyeokjae, Suwon-si Gyeonggi-do 16677 (KR)
(74) Representative: HGF
(86) International application number: PCT/KR2023/017042
(87) International publication number: WO 2024/096496

(57) **Abstract**

In embodiments, an electronic device comprises a display, at least one camera, a memory configured to store instructions, and at least one processor operatively coupled to the at least one camera, the display, and the memory. The at least one processor is configured to perform operations according to the embodiments when the instructions are executed. The at least one processor is configured to acquire an image through the at least one camera. The at least one processor is configured to identify color information of a first virtual lamp. The at least one processor is configured to identify direction information of the first virtual lamp on the basis of brightness information of an object area within the image. The at least one processor is configured to identify direction information of a second virtual lamp. The at least one processor is configured to identify color information of the second virtual lamp. The at least one processor is configured to display an output image.

## Description

### [Technical Field]

The following descriptions relate to an electronic device and a method for providing a plurality of virtual lights.

### [Background Art]

As technology using a mobile camera advances, a function for applying various effects to a person in a captured image may be used. An electronic device may apply a blur effect to a background by separating the background and the person, or may apply a virtual light effect via three-dimensional information with respect to the person.

### [Disclosure]

### [Technical Solution]

According to an embodiment, an electronic device may comprise a display, at least one camera, memory configured to store instructions, and at least one processor operably coupled with the at least one camera, the display, and the memory. The at least one processor, when the instructions are executed, may be configured to perform operations according to embodiments. The at least one processor may be configured to obtain an image via the at least one camera. The at least one processor may be configured to identify, based on color information of a background area within the image and color information of an object area within the image, color information of a first virtual light. The at least one processor may be configured to identify, based on bright information of the object area within the image, direction information of the first virtual light. The at least one processor may be configured to identify, based on the direction information of the first virtual light, direction information of the second virtual light. The at least one processor may be configured to identify, based on the color information of the first virtual light, color information of the second virtual light. The at least one processor may be configured to display, based on the color information of the first virtual light, the direction information of the first virtual light, the color information of the second virtual light, and the direction information of the second virtual light, an output image.

According to an embodiment, a method performed by an electronic device may comprise obtaining an image via at least one camera. The method may comprise identifying, based on color information of a background area within the image and color information of an object area within the image, color information of a first virtual light. The method may comprise identifying, based on bright information of the object area within the image, direction information of the first virtual light. The method may comprise identifying, based on the direction information of the first virtual light, direction information of the second virtual light. The method may comprise identifying, based on the color information of the first virtual light, color information of the second virtual light. The method may comprise displaying, based on the color information of the first virtual light, the direction information of the first virtual light, the color information of the second virtual light, and the direction information of the second virtual light, an output image.

### [Description of the Drawings]

FIG. 1 is a block diagram of an electronic device in a network environment according to an embodiment.
FIG. 2 illustrates an example of a functional configuration of an electronic device according to an embodiment.
FIG. 3 illustrates an operation flow of an electronic device for providing an effect on a plurality of virtual lights according to an embodiment.
FIGS. 4A to 4B illustrate examples of an output image according to an embodiment.
FIG. 5 illustrates an example of a background area to which an effect according to a plurality of virtual lights will be applied, according to an embodiment.
FIG. 6 illustrates an operation flow of an electronic device for providing a light effect based on a virtual background, according to an embodiment.
FIG. 7 illustrates examples of an output image for each virtual background according to an embodiment.
FIG. 8 illustrates an operation flow of an electronic device for controlling a plurality of virtual lights according to an embodiment.
FIG. 9 illustrates an example of a user interface for controlling a plurality of virtual lights according to an embodiment.
FIGS. 10A to 10C illustrate examples of adjusting a plurality of virtual lights according to an embodiment.
FIGS. 11A to 11B illustrate other examples of adjusting a plurality of virtual lights according to an embodiment.
FIG. 12 illustrates an example of adding a virtual light according to an embodiment.
FIG. 13 illustrates an operation flow of an electronic device for displaying an output image for a plurality of virtual lights according to an embodiment.
FIG. 14 illustrates an operation flow of an electronic device for indicating a shadow effect according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to an area (e.g., a part, an area, a space, and a surface), a term referring to information (e.g., data, an image, and information), a term referring to a computational state (e.g., a step, an operation, and a procedure), a term referring to a channel, a term referring to network entities, a term referring to a component of a device, and the like, used in the following description, are exemplified for convenience of explanation. Therefore, the present disclosure is not limited to the terms described below, and another term with an equivalent technical meaning may be used.

Terms referring to parts of an electronic device (e.g., module, antenna, antenna element, circuit, processor, chip, component, device), terms referring to a circuit or a component of the circuit, and the like, used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'.

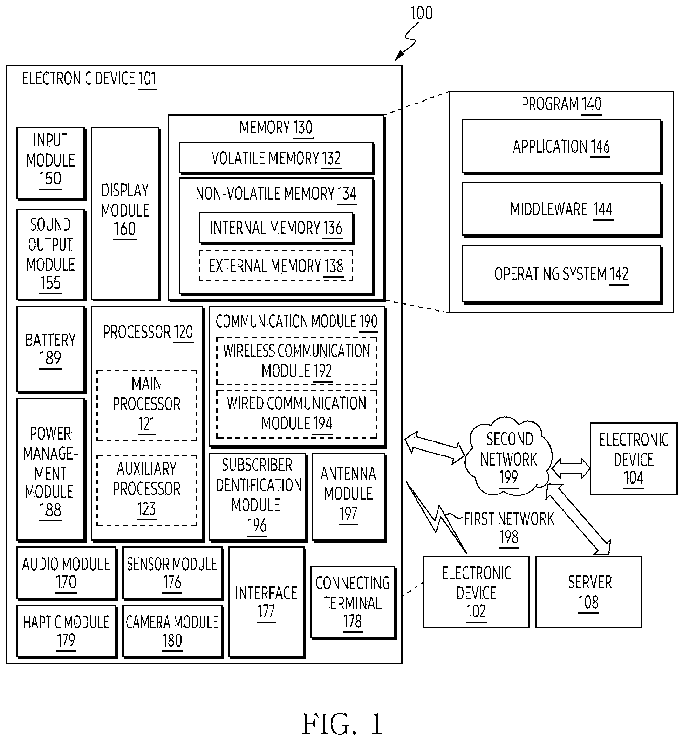

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

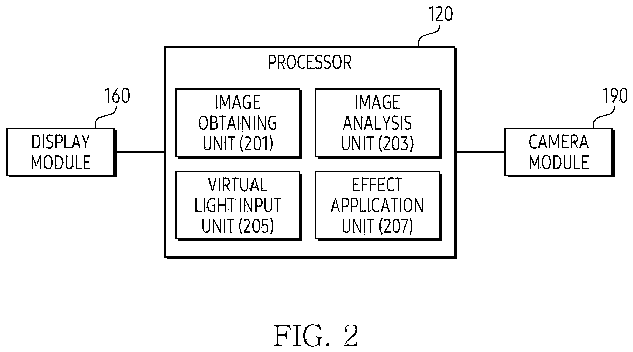

FIG. 2 illustrates an example of a functional configuration of an electronic device according to an embodiment.

Referring to FIG. 2, the electronic device (e.g., the electronic device 101 of FIG. 1) may include a processor (e.g., the processor 120 of FIG. 1), a camera module (e.g., the camera module 180), and a display module (e.g., the display module 160).

The electronic device 101 may include the processor 120. The processor 120 may be implemented with one or more integrated circuit (IC) chips and may execute various data processes. For example, the processor 120 may be implemented as a system on chip (SoC). The processor 120 may include sub-components including a central processing unit (CPU), a graphics processing unit (GPU), a neural processing unit (NPU), an image signal processor (ISP), a display controller, a memory controller, a storage controller, an application processor (AP), a communication processor (CP), and/or a sensor interface. The sub-components are merely exemplary. For example, the processor 120 may further include other sub-components. For example, some sub-components may be omitted from the processor 120.

According to an embodiment, the processor 120 may include an image obtaining unit 201, an image analysis unit 203, a virtual light input unit 205, and an effect application unit 207. The image obtaining unit 201 may obtain an image including a person via the camera module 180 (e.g., a front camera or a rear camera). The image may include an object area corresponding to the person and a background area other than the object area. The image analysis unit 203 may detect a face position of the object area within the image. The image analysis unit 203 may obtain a depth map of the image by calculating a distance. The image analysis unit 203 may separate the object area and the background area other than the object area within the image. The image analysis unit 203 may analyze characteristic information (e.g., color information, and bright information) of the obtained person. The image analysis unit 203 may analyze information on light within the obtained image. The virtual light input unit 205 may obtain an input for at least one parameter for a virtual light. The at least one parameter for the virtual light may include at least one of the number of virtual lights, color of the virtual light, a strength of the virtual light, and a direction of the virtual light. The effect application unit 207 may apply a virtual light effect to the obtained image according to the at least one parameter that is inputted. The effect application unit 207 may generate an output image to which the virtual light effect is applied.

The electronic device 101 may include the camera module 180. For example, the camera module 180 may include at least one of a wide-angle camera, an ultra-wide camera, a first telephoto camera, or a second telephoto camera. According to an embodiment, the electronic device 101 may capture an image via at least two cameras, respectively, and obtain a depth map by combining the captured images. In addition, according to an embodiment, the electronic device 101 may capture an image via a single camera and obtain a depth map by learning the captured images. Hereinafter, in the present disclosure, an image indicating a depth of a subject or the background is referred to as the depth map, but it is certain that various terms (e.g., a depth video, a depth image, and depth information) other than the depth map may also be used.

Hereinafter, embodiments of the present disclosure will be described using the terms of a camera or cameras, but the embodiments of the present disclosure are not limited to the above-described terms. According to an embodiment, the electronic device 101 may obtain a depth map by using at least one of a plurality of lenses included in one camera module 180. According to an embodiment, the electronic device 101 may include an image signal processor (ISP) for image signal processing. The ISP may be electrically and/or operably connected with a plurality of lenses. In addition, the ISP may be electrically and/or operably connected to one or more image sensors.

The electronic device 101 may include the display module 160. The display module 160 may visually provide information to a user. The display module 160 may display an image processed by the processor 120 by control of the processor 120. The electronic device 101 may display an image obtained from the camera module 180 via the display module 160. According to an embodiment, the display module 160 may display the output image in which a light effect by a plurality of virtual lights is reflected by the control of the processor 120 (or via a separate image processor).

According to development of technology, it is possible to apply multiple light source effects of various colors instead of just one virtual light. However, parameters for controlling the virtual light may be limited on mobile due to complex UX. When a light source having an arbitrary color or a direction is applied to a person, a sense of incongruity with the background may occur. To solve the above-described problem, the embodiments propose a method for providing a plurality of virtual lights intuitively and efficiently. In addition, the electronic device may output more natural result by applying various effects not only to the person, but also to the background.

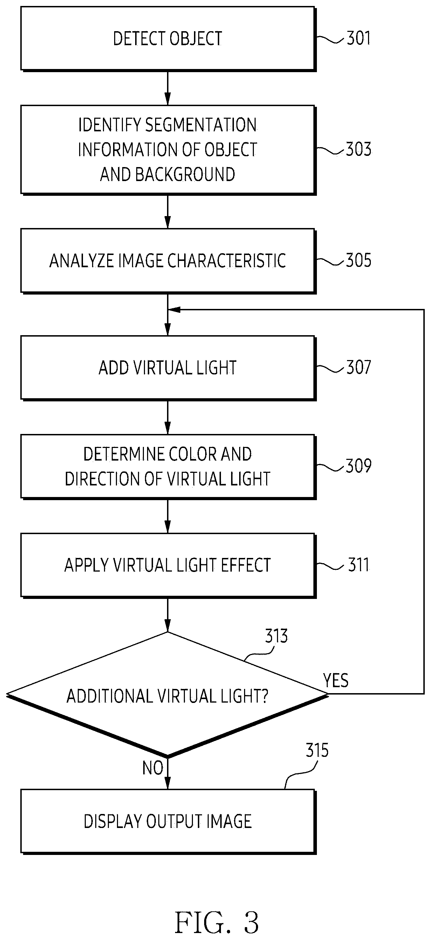

FIG. 3 illustrates an operation flow of an electronic device (e.g., the electronic device 101) for providing an effect on a plurality of virtual lights according to an embodiment.

Referring to FIG. 3, in operation 301, the electronic device 101 may perform object detection. The electronic device 101 may obtain an image via a camera (e.g., the camera module 180). The image may include an object area and a background area. An object (e.g., a person) may be included in the object area. The electronic device 101 may detect the object within the image via an object detection algorithm.

In operation 303, the electronic device 101 may identify segmentation information of the object and the background. The electronic device 101 may distinguish the object area and the background area within the image. The electronic device 101 may obtain a depth map for the image. The electronic device 101 may generate segmentation information based on the object detected within the object area and the depth map.

In operation 305, the electronic device 101 may analyze an image characteristic. The image characteristic may include at least one of information on light within the image, information on the object area within the image, or information on the background area within the image. According to an embodiment, the electronic device 101 may obtain at least one of a color, brightness, and a direction of a light, a color of the background area, brightness of the background area, a color of the object area, or brightness of the object area within the image.

In operation 307, the electronic device 101 may add a virtual light. The electronic device 101 may receive a user input for adding the virtual light. The electronic device 101 may determine to add the virtual light within the image. The virtual light refers to a light source for generating a light effect within the image. Brightness and a color of the object within the image may vary according to a position of the virtual light. When one virtual light (hereinafter, a first virtual light) is added, the electronic device 101 may determine a default position of the first virtual light. For example, the electronic device 101 may determine a predefined position within the image as the position of the first virtual light. As another example, the electronic device 101 may determine a position identified according to the user input as the position of the first virtual light.

In operation 309, the electronic device 101 may determine color information and direction information of the virtual light (e.g., the first virtual light). The color information of the first virtual light may indicate a color of the first virtual light. The direction information of the first virtual light may indicate a direction to which the first virtual light faces from the position of the first virtual light within the image. The electronic device 101 may automatically determine a default direction of the first virtual light and a default color of the first virtual light.

According to an embodiment, the default color may be determined based on a result of characteristic analysis of the image. According to an embodiment, the default color may be determined based on the color of light currently applied within the image, a color of a person (e.g., a color of clothes) within the object area, and the color of the background area. The default color may be determined as a complementary color to the color of the person within the object area. As another example, the default color may be determined as a color within a certain range from the color of the person within the object area.

According to an embodiment, the default direction may be determined based on the result of the characteristic analysis of the image. According to an embodiment, the default direction may be determined based on a characteristic of light of the person that is actually being applied and a characteristic of the virtual light. For example, the electronic device 101 may detect the brightest area and the darkest area by analyzing the characteristic of the light of the person that is actually being applied. In order to explain embodiments of the present disclosure, darkness and brightness of a color may be determined via a lightness. For example, the specific color being darker than another color may mean that a lightness of the specific color is lower than a lightness of the other color. The specific color being brighter than another color may mean that the lightness of the specific color is higher than the lightness of the other color. A lightness in color information may be determined based on a representative value of the color. For example, the specific color being darker than another color may mean that a representative value for the specific color is closer to black (e.g., an RGB value '0,0,0') than a representative value for the other color. In addition, the specific color being brighter than the other color may mean that the specific color is closer to black (e.g., an RGB value '100, 100, 100'). For example, the representative value may be determined as an average value or the maximum value of an R value, a G value, and a B value. The lightness of the color information may be distinguished from bright information of the virtual light. The bright information may indicate that an amount of light emitted or reflected from the light source is large or small. According to an embodiment, when the color information of the virtual light is a brighter color than a reference value, a direction of the virtual light may be set to face the darkest area. When the color of the virtual light is a darker color than the reference value, the direction of the virtual light may be set to face the brightest area.

Although not illustrated in FIG. 3, the color, the direction, and the position of the first virtual light may be changed according to a user input by a user interface (UI).

In operation 311, the electronic device 101 may apply a virtual light effect. The electronic device 101 may apply an effect of the virtual light (e.g., the first virtual light) to each of the object area and the background area of the image. According to an embodiment, the electronic device 101 may apply the effect of the first virtual light to the object area. A color of at least a portion of the object area may be changed based on the color of the first virtual light. The at least a portion of the object area may correspond to the direction of the first virtual light from the position of the first virtual light. In addition, brightness of the at least a portion of the object area may be changed based on the direction and the position of the first virtual light. As the position of the object area is closer to the position of the first virtual light, the brightness is brighter, and the position of the object area is farther from the position of the first virtual light, the brightness is darker.

According to an embodiment, the electronic device 101 may apply an effect of the second virtual light to the object area. A color of at least a portion of the object area may be changed based on a color of the second virtual light. At least another portion of the object area may correspond to a direction of the second virtual light from a position of the second virtual light. In addition, brightness of at least the other portion of the object area may be changed based on the direction and the position of the second virtual light. As the position of the object area is closer to the position of the second virtual light, the brightness is brighter, and the position of the object area is farther from the position of the second virtual light, the brightness is darker.

According to an embodiment, the electronic device 101 may apply the effect of the first virtual light and the effect of the second virtual light to the background area. The electronic device 101 may identify, based on the position and the direction for the first virtual light, a first light area among the background area. The electronic device 101 may adjust brightness and a color within the first light area according to a distance and a strength of the first virtual light. The electronic device 101 may identify, based on the position and the direction for the second virtual light, a second light area of the background area. The electronic device 101 may adjust brightness and color within the second light area according to the distance and the strength of the second virtual light.

**In** operation 313, the electronic device 101 may determine whether there is an additional virtual light. In a case that there is the additional virtual light, the electronic device 101 may perform the operation 307. When the operation 307 is performed after the operation 313, the second virtual light may be added. According to an embodiment, the electronic device 101 may add the second virtual light for the image. According to an embodiment, color information for the second virtual light may be determined based on the color information for the first virtual light. For example, the color information for the second virtual light may be determined as the complementary color of the color information for the first virtual light. For another example, the color information for the second virtual light may be determined as at least one value within a certain range of the color information for the first virtual light. According to an embodiment, based on the object area, the position of the second virtual light may be automatically determined to be in an opposite area to the position of the first virtual light. In addition, for example, the position of the second virtual light may be determined to be symmetrical to the position of the first virtual light, centering on the object area within the image. In addition, according to an embodiment, direction information of the second virtual light may be determined based on the direction information of the first virtual light. For example, the direction information of the second virtual light may be determined to be opposite to the direction information of the first virtual light. In addition, for example, the direction information of the second virtual light may be determined to be symmetrical to the direction information of the first virtual light, centering on the object area within the image.

The electronic device 101 may perform operation 315 in a case that there is no additional virtual light.

In operation 315, the electronic device 101 may display an output image. The output image may correspond to a result of applying a virtual light effect to an image obtained via a camera (e.g., the camera module 180) of the electronic device 101. The electronic device 101 may generate the output image to which the effect of the first virtual light and the effect of the second virtual light are applied. The electronic device 101 may generate the output image by applying the effect of the first virtual light and the effect of the second virtual light to the image. As the light effect by the first virtual light is applied, a color and brightness of at least a portion of the object area in the obtained image may be changed. For example, the at least a portion of the object area may correspond to an area within the object area close to the position of the first virtual light. As the light effect by the second virtual light is applied, a color and brightness of at least another portion of the object area in the obtained image may be changed. For example, the at least the other portion of the object area may correspond to an area within the object area close to the position of the second virtual light. Based on the first virtual light and the second virtual light, the color and the brightness of the object area in the obtained image may be changed. The output image may include an object area having the changed color and brightness.

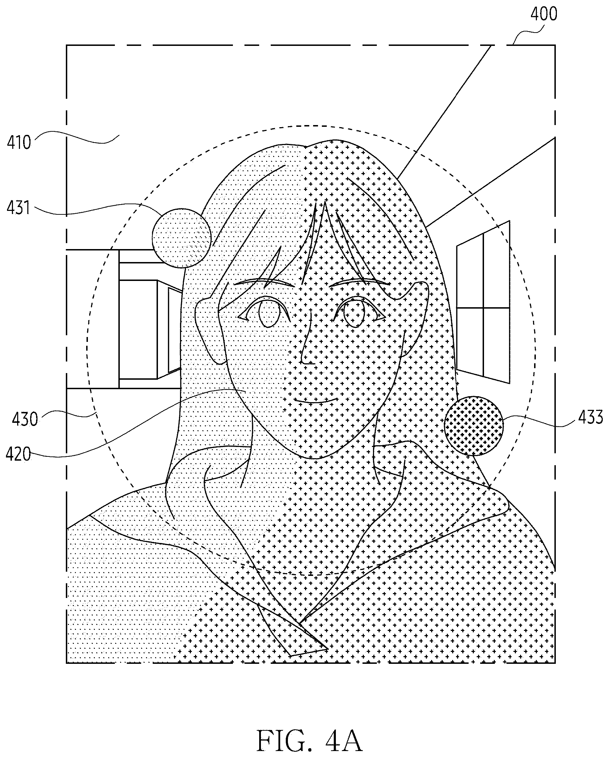

FIGS. 4A to 4B illustrate examples of output images according to an embodiment.

Referring to FIG. 4A, an electronic device 101 may display an output image 400 for a plurality of virtual lights. The electronic device 101 may obtain an image (hereinafter referred to as an original image) via a camera (e.g., the camera module 180). The electronic device 101 may detect an object (e.g., a person) within the image. The electronic device 101 may distinguish a background area 410 from an object area 420. The object area 420 may include the object. The electronic device 101 may generate a plurality of virtual lights for the object. The electronic device 101 may display a virtual circle 430 for the plurality of virtual lights on the output image 400. The virtual circle 430 may be disposed centered around the object of the object area 420. The plurality of virtual lights may include a first virtual light and a second virtual light. According to an embodiment, the electronic device 101 may display an object for displaying a virtual light within the virtual circle 430 on the output image 400. For example, the electronic device 101 may display a first light object 431 for displaying the first virtual light and a second light object 433 for displaying the second virtual light on the output image 400. The first light object 431 and the second light object 432 may be superimposed on the output image 400.

The electronic device 101 may apply a light effect to an object of the object area 420 within the image. The electronic device 101, based on color information and direction information of the first light object 431, may change a color of an area of an object adjacent to the first light object 431. The electronic device 101 may change brightness so that the brightness of a corresponding area is lower as it is an area (e.g., pixels) that is farther from the first light object 431. The electronic device 101, based on color information and direction information of the second light object 433, may change a color of an area of an object adjacent to the second light object 433. The electronic device 101 may change brightness so that the brightness of a corresponding area is lower as it is an area (e.g., pixels) that is farther from the second light object 433.

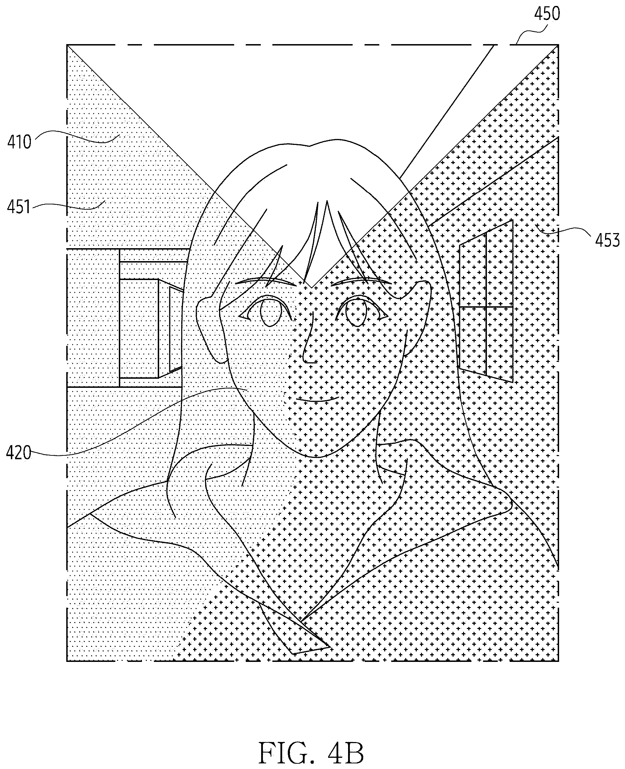

Referring to FIG. 4B, the electronic device 101 may apply an additional effect to the background area 410. According to an embodiment, the electronic device 101 may apply a light effect to the background area 410 according to a color and a strength of a virtual light and a distance derived from a depth map. The electronic device 101 may apply the effect of the first virtual light to a first part 451 of the background area 410, based on the center of the object. A color of the first part 451 may be changed due to the effect of the first virtual light. The electronic device 101 may add a first color background according to color information of the first virtual light to the first part 451. In addition, the electronic device 101 may apply the effect of the second virtual light to a second part 453 of the background area 410, based on the center of the object. A color of the second part 453 may be changed due to the effect of the second virtual light. The electronic device 101 may add a second color background according to color information of the second virtual light to the second part 453. According to an embodiment, based on a segmentation map of the person and the background, the electronic device 101 may blend and display a background part of the background area 410 and a color background according to the light effect. The first color background may be transparently displayed so that a background part of the background area 410 corresponding to the first part 451 is visible. The second color background may be transparently displayed so that a background part of the background area 410 corresponding to the second part 453 is visible.

In FIG. 4B, the first part 451 and the second part 453 within the background area are divided in a diagonal shape based on the center of the object, but the embodiments of the present disclosure are not limited thereto. An area for a virtual light within the background area may be circular in addition to being the diagonal shape.

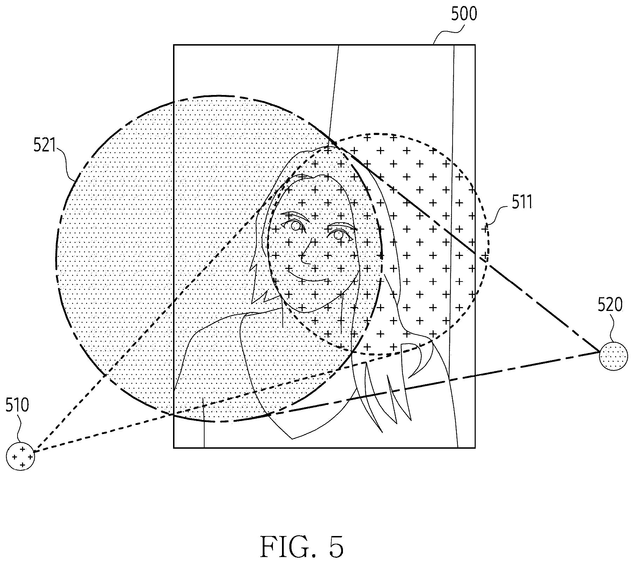

FIG. 5 illustrates an example of a background area to which an effect according to a plurality of virtual lights will be applied, according to an embodiment.

Referring to FIG. 5, an electronic device 101 may obtain an image 500. The electronic device 101 may identify an object area and a background area within the obtained image 500, respectively. A light effect by a plurality of lights may be applied to an object within the object area of the electronic device 101. The light effect by the plurality of lights may be also applied to the background area of the electronic device 101. For example, the virtual light effect in a circular shape (or an oval shape) may be applied to the background area of the image 500, such as a stand light. The electronic device 101 may identify a size of a background part to which the light effect is to be applied, based on a depth map, according to a distance and a strength of the virtual light applied to the object (e.g., a person) within the image. The electronic device 101 may determine a position of the virtual light in order to apply the light effect to the background part.

According to an embodiment, the electronic device 101 may determine a position of a first virtual light 510. The electronic device 101 may determine a first light area 511 by the first virtual light 510 based on the position and a direction of the first virtual light 510. A light effect may be applied to a first part overlapped with the first light area 511 of the background area of the image 500. As the light effect is applied, color information of the first part may be determined based on color information of the first virtual light 510. The electronic device 101 may determine the color information of the first part based on the depth map, so that an amount of color change in a corresponding area decreases as it is an area that gets farther away from the first virtual light 510. In addition, the electronic device 101 may determine brightness of the first part based on the depth map, so that brightness in a corresponding area decreases as the direction of the first virtual light 510 is different or as it is an area that gets farther away from the position of the first virtual light 510. According to an embodiment, the electronic device 101 may change the color and the brightness of the first part based on direction information and color information of the first virtual light.

According to an embodiment, the electronic device 101 may determine a position of a second virtual light 520. The electronic device 101 may determine a second light area 521 by the second virtual light 520 based on the position and a direction of the second virtual light 520. A light effect may be applied to a second part overlapped with the second light area 521 of the background area of the image 500. As the light effect is applied, color information of the second part may be determined based on color information of the second virtual light 520. The electronic device 101 may determine the color information of the second part based on the depth map, so that an amount of color change in a corresponding area decreases as it is an area that gets farther away from the second virtual light 520. In addition, the electronic device 101 may determine brightness of the second part based on the depth map, so that brightness in a corresponding area decreases as the direction of the second virtual light 520 is different or as it is an area that gets farther away from the position of the second virtual light 520. According to an embodiment, the electronic device 101 may change the color and the brightness of the second part based on direction information and color information of the second virtual light.

Although not illustrated in FIG. 5, the electronic device 101 may generate an output image based on the changed color and the changed brightness in the first part (i.e., the overlapping part of the first light area 511 and the background area) and the changed color and the changed brightness in the second part (i.e., the overlapping part of the second light area 521 and the background area). The electronic device 101 may generate the output image from the obtained image to match a direction and a color of light by the added virtual light. The electronic device 101 may display the output image.

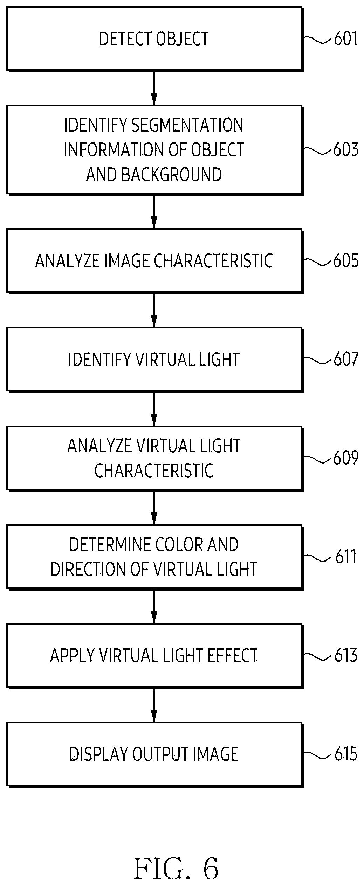

FIG. 6 illustrates an operation flow of an electronic device (e.g., the electronic device 101) for providing a light effect based on a virtual background according to an embodiment.

Referring to FIG. 6, in operation 601, the electronic device 101 may perform object detection. The electronic device 101 may obtain an image via a camera (e.g., the camera module 180). The image may include an object area and a background area. An object (e.g., a person) may be included in the object area. The electronic device 101 may detect the object within the image via an object detection algorithm.

In operation 603, the electronic device 101 may identify segmentation information of the object and a background. The electronic device 101 may distinguish the object area and the background area within the image. The electronic device 101 may obtain a depth map for the image. The electronic device 101 may generate the segmentation information based on the object detected within the object area and the depth map.

In operation 605, the electronic device 101 may analyze an image characteristic. The image characteristic may include at least one of information on light within the image, information on the object area within the image, or information on the background area within the image. According to an embodiment, the electronic device 101 may obtain at least one of a color, brightness, and a direction of a light, a color of the background area, brightness of the background area, a color of the object area, or brightness of the object area, within the image.

In operation 607, the electronic device 101 may identify a virtual background. The electronic device 101 may receive a user input indicating the virtual background among a plurality of backgrounds. The electronic device 101 may identify the virtual background. According to an embodiment, the electronic device 101 may apply the virtual background to the background area within the image. The electronic device 101 may replace a background (hereinafter, an original background) of the background area within the image with the background indicated by the user input. For example, the plurality of backgrounds may include an aurora background, a water-colored background, a luminous background, a sunset background, or a starlight background. In addition, according to an embodiment, the electronic device 101 may generate a mixed background by blending the virtual background identified by the user input with the original background within the image. The electronic device 101 may apply the mixed background to the background area within the image. The electronic device 101 may replace the original background within the image with the mixed background. Through the mixed background, the electronic device 101 may provide a more natural background image.

In operation 609, the electronic device 101 may perform characteristic analysis of the virtual background. According to an embodiment, the electronic device 101 may identify representative colors of the virtual background. The electronic device 101 may identify colors occupied in many parts (e.g., pixels) among colors included in the virtual background as the representative colors. According to an embodiment, the electronic device 101 may identify information on light of the virtual background.

In operation 611, the electronic device 101 may determine a color and a direction of the virtual light. The electronic device 101 may identify position information of the virtual light based on the representative colors of the background and the direction of the light. The electronic device 101 may identify direction information of the virtual light based on the representative colors of the background and the direction of the light.

According to an embodiment, a virtual light associated with a background of each of the plurality of backgrounds may be predefined. Color information and bright information of the virtual light may be determined based on color information and bright information of the background. The electronic device 101 may determine, based on the background indicated by the user input, color information and direction information of the virtual light.

According to an embodiment, the electronic device 101 may determine color, position, and direction information of the light based on the identified background. For example, the electronic device 101 may identify the color information of the virtual light based on the representative colors of the background and the direction of the light. The electronic device 101 may identify the position information of the virtual light based on the representative colors of the background and the direction of the light. The electronic device 101 may identify the direction information of the virtual light based on representative colors of the background and the direction of the light. Meanwhile, although not illustrated in FIG. 6, the electronic device 101 may adjust the color and the direction of the virtual light in response to a user input for manually indicating the color and the direction.

In operation 613, the electronic device 101 may apply a virtual light effect. The electronic device 101 may apply the virtual light effect according to the virtual light. The electronic device 101 may generate an output image based on the position information, the color information, and the direction information of the virtual light identified based on the background.

In operation 615, the electronic device 101 may display an output image. The electronic device 101 may apply the virtual light effect to an image including the virtual background based on the color information of the virtual light and the bright information of the virtual light. The electronic device 101 may generate an output image in which a color and brightness of at least a portion of the object area are changed by the virtual light effect. The electronic device 101 may display an output image via a display (e.g., the display module 160) of the electronic device 101.

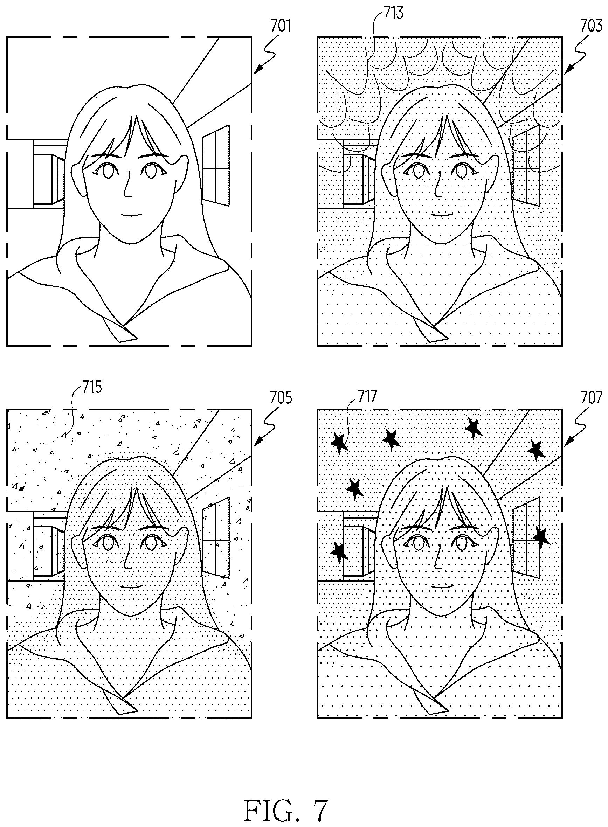

FIG. 7 illustrates examples of output images for each virtual background according to an embodiment.

Referring to FIG. 7, an electronic device 101 may obtain an image 701 including a background area and an object area. A background of the background area may be referred to as an original background. An object of the object area may be referred to as an original object. The electronic device 101 may receive a user input for selecting a specific virtual background among a plurality of virtual backgrounds. For example, the plurality of virtual backgrounds may include an aurora background 713. In addition, for example, the plurality of virtual backgrounds may include a luminous background 715. In addition, for example, the plurality of virtual backgrounds may include a starlight background 717. According to an embodiment, as the selected virtual background is applied, the electronic device 101 may generate a mixed background in which the virtual background and the original background are blended. The electronic device 101 may apply an effect of a plurality of virtual light to an image including the mixed background and the object.

The electronic device 101 may display an output image 703. The output image 703 may include a background in which the aurora background 713 and the original background are blended in the background area of the image. Based on color information and bright information of the mixed background, color information and bright information of the virtual light may be determined. A color and brightness of at least a portion of the original object may be changed based on the color information and the bright information of the virtual light. An object area of the output image 703 may include an object having the changed color and brightness. The color and the brightness of the object may be related to a color and brightness of the aurora background 713.

The electronic device 101 may display an output image 705. The output image 705 may include a background in which the luminous background 715 and the original background are blended in the background area of the image. Based on color information and bright information of the mixed background, color information and bright information of a virtual light may be determined. The color and brightness of at least a portion of the original object may be changed based on the color information and the bright information of the virtual light. An object area of the output image 705 may include an object having the changed color and brightness. The color and the brightness of the object may be related to a color and brightness of the luminous background 715.

The electronic device 101 may display an output image 707. The output image 707 may include a background in which the starlight background 717 and the original background are blended in the background area of the image. Based on color information and bright information of the mixed background, color information and bright information of a virtual light may be determined. The color and brightness of at least a portion of the original object may be changed based on the color information and the bright information of the virtual light. An object area of the output image 707 may include an object having the changed color and brightness. The color and the brightness of the object may be related to a color and brightness of the starlight background 717.

Referring to the output image 703, the output image 705, and the output image 707, it may be confirmed that a virtual light effect applied to the object area varies according to a type of a virtual background added to the image.

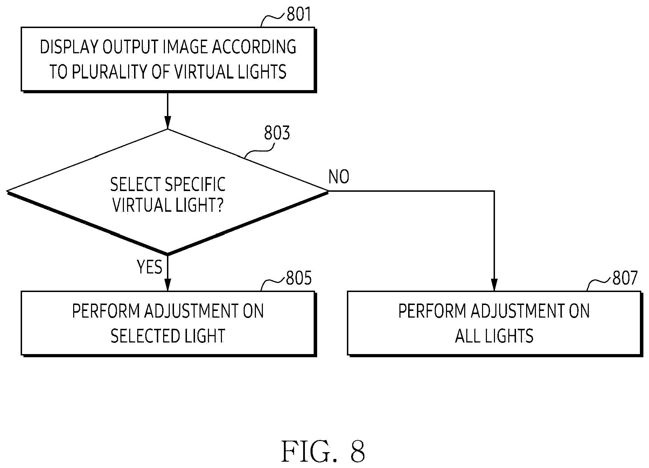

FIG. 8 illustrates an operation flow of an electronic device (e.g., the electronic device 101) for controlling a plurality of virtual lights according to an embodiment.

Referring to FIG. 8, in operation 801, the electronic device 101 may display an output image according to a plurality of virtual lights. For example, the electronic device 101 may identify a first virtual light having a default color and a default direction. The electronic device 101 may determine color information of a second virtual light based on color information of the first virtual light. The electronic device 101 may determine direction information of the second virtual light based on direction information of the first virtual light. The electronic device 101 may determine position information of the second virtual light based on position information of the first virtual light. The electronic device 101 may change a color and brightness of at least a portion of an object area by applying an effect of the first virtual light to the object area of the image. The electronic device 101 may change the color and the brightness of the at least a portion of the object area by applying an effect of the second virtual light to the object area of the image.

In operation 803, the electronic device 101 may identify whether a specific virtual light is selected. The electronic device 101 may identify whether a user input for selecting the specific virtual light is received. If the specific virtual light is selected, the electronic device 101 may perform operation 805. If the specific virtual light is not selected, the electronic device 101 may perform operation 807.

In the operation 805, the electronic device 101 may perform control on the selected virtual light. The electronic device 101 may perform individual control on the selected light. The electronic device 101 may further display a superimposed control object on the image via a display (e.g., the display module 160). The electronic device 101 may adjust brightness and a color of the selected virtual light via a user input (e.g., an input for increasing or lowering a strength of the virtual light) on the control object.

In operation 807, the electronic device 101 may perform control on all virtual lights. The electronic device 101 may further display a superimposed control object on the image via the display (e.g., the display module 160). The electronic device 101 may adjust brightness and a color of each of a plurality of virtual lights set for the image via the user input (e.g., the input for increasing or lowering the strength of the virtual light) for the control object.

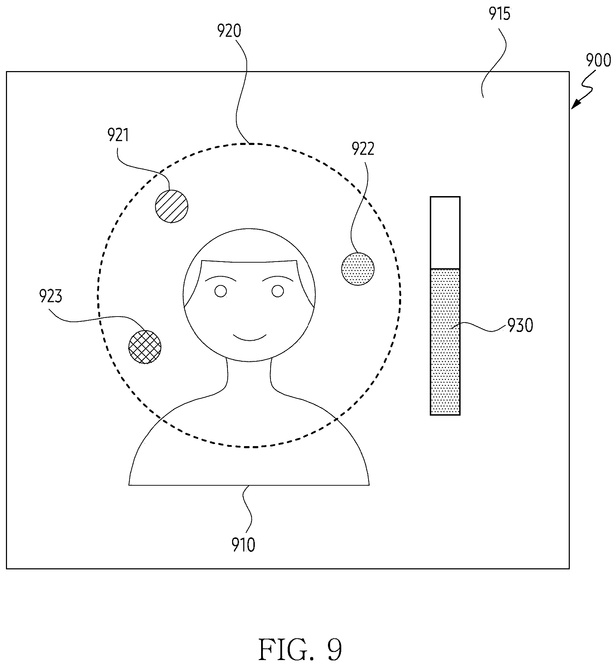

FIG. 9 illustrates an example of a user interface for controlling a plurality of virtual lights according to an embodiment.

Referring to FIG. 9, an electronic device 101 may obtain an image 900. The electronic device 101 may identify an object 910 within the image. According to an embodiment, in the electronic device 101, a virtual circle 920 surrounding at least a portion (e.g., a face) of the object 910 may be superimposed on the image. The virtual circle 920 may include objects for indicating a plurality of virtual lights. For example, the virtual circle 920 may include a first light object 921 to indicate a first virtual light. The first light object 921 may indicate a position of the first virtual light, and a color of the first light object 921 may indicate color information of the first virtual light. The virtual circle 920 may include a second light object 922 to indicate a second virtual light. The second light object 922 may indicate a position of the second virtual light, and a color of the second light object 922 may indicate color information of the second virtual light. The virtual circle 920 may include a third light object 923 to indicate a third virtual light. The third light object 923 may indicate a position of the third virtual light, and a color of the third light object 923 may indicate color information of the third virtual light.

According to an embodiment, the electronic device 101 may display a visual object 930 in a bar-type. The electronic device 101 may display the visual object 930 in a partial area of a background area 915 within the image 900. The visual object 930 may provide a user interface (UI) for adjusting an intensity of brightness of a virtual light. For example, the visual object 930 may be a slider. The electronic device 101, based on receiving a user input dragging upward on the visual object 930, may increase a strength of the brightness of the virtual light. The electronic device 101, based on receiving a user input dragging downward on the visual object 930, may reduce the strength of the brightness of the virtual light.

According to an embodiment, when a separate virtual light is not specified, in response to a user input on the visual object 930, the electronic device 101 may collectively adjust a strength of brightness for each of the plurality of virtual lights. Meanwhile, according to an embodiment, when the virtual light is specified by a user input or a preset, in response to the user input on the visual object 930, the electronic device 101 may adjust a strength of brightness of the specified virtual light. In addition, when the electronic device 101 receives a user input for selecting another virtual light and receives the user input on the visual object 930, the electronic device 101 may adjust a strength of brightness of the other virtual light according to the user input.

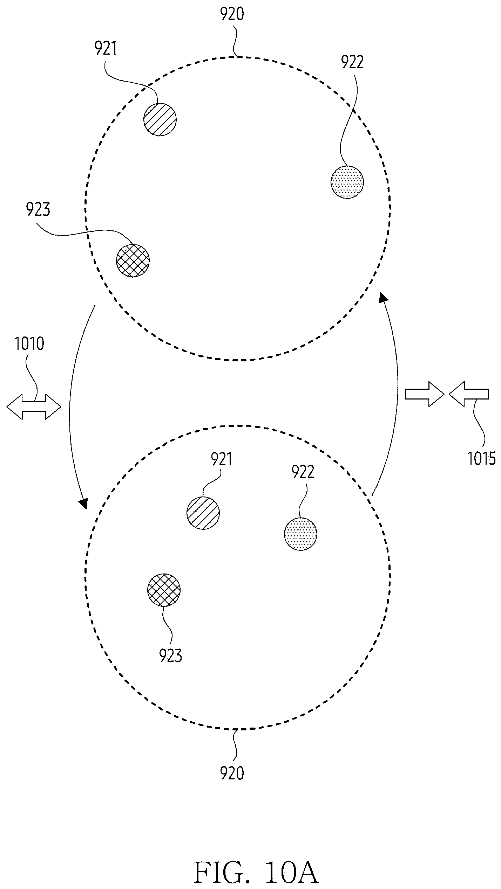

FIGS. 10A to 10C illustrate examples of adjusting a plurality of virtual lights according to an embodiment. The same reference numerals may be used for the same descriptions. In FIGS. 10A to 10C, a situation is described where the virtual circle 920, the first light object 921, the second light object 922, and the third light object 923 of FIG. 9 are superimposed on the image.

Referring to FIG. 10A, according to an embodiment, an electronic device 101 may receive a gesture input 1010 (e.g., a spread input) indicating zoom-in. Based on receiving the gesture input 1010 indicating the zoom-in, a position of the first light object 921, a position of the second light object 922, and a position of the third light object 923 within the virtual circle 920 of the electronic device 101 may be changed. For example, in response to the gesture input 1010 indicating the zoom-in, a distance between the first light object 921, the second light object 922, and the third light object 923 may be closer. For example, the position of the first light object 921 may be changed so that the first light object 921 becomes closer to the center of the virtual circle 920. The position of the second light object 922 may be changed so that the second light object 922 becomes closer to the center of the virtual circle 920. The position of the third light object 923 may be changed so that the third light object 923 becomes closer to the center of the virtual circle 920. As a position of a light object changes, an area to which a virtual light is applied may change. For example, as the first light object 921 is positioned farther away from the object within the image, it may operate like a wide light. An effect application area by the first light object 921 may become wider, but due to a relatively farther distance, an amount of change in a color and brightness may be smaller.

According to an embodiment, the electronic device 101 may receive a gesture input 1015 (e.g., a pinch input) indicating zoom-out. Based on receiving the gesture input 1015 indicating the zoom-out, a position of the first light object 921, a position of the second light object 922, and a position of the third light object 923 within the virtual circle 920 of the electronic device 101 may be changed. For example, in response to the gesture input 1015 indicating the zoom-out, a distance between the first light object 921, the second light object 922, and the third light object 923 may increase. For example, the position of the first light object 921 may be changed so that the first light object 921 moves away from the center of the virtual circle 920. The position of the second light object 922 may be changed so that the second light object 922 moves away from the center of the virtual circle 920. The position of the third light object 923 may be changed so that the third light object 923 moves away from the center of the virtual circle 920.

The electronic device 101 may adjust a gap between virtual lights via the gesture input 1010 or the gesture input 1015. When a position of a virtual light is changed, an area to which an effect of the virtual light is applied within the image may be changed. The electronic device 101 may change a size and a position of a light area by each virtual light within the image via the gesture input 1010 or the gesture input 1015. As the position of the light object changes, the area to which the virtual light is applied may change. For example, as the second light object 922 is positioned closer to the object within the image, it may operate like a pin light. An effect application area by the second light object 922 may become narrower, but due to a relatively close distance, an amount of change in a color and brightness may increase.

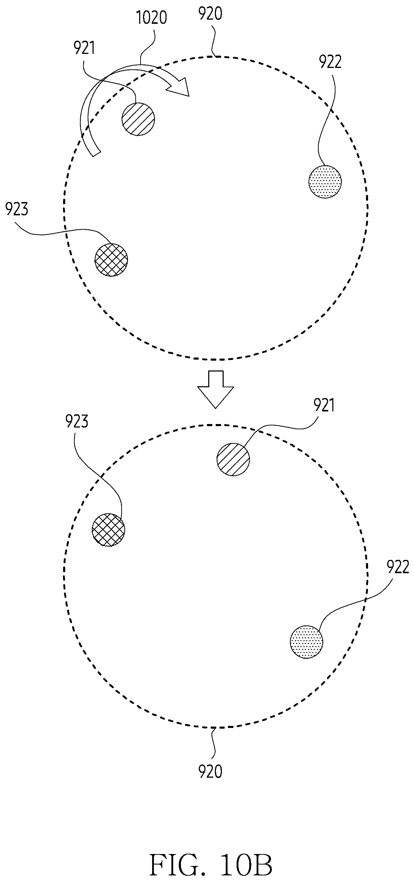

Referring to FIG. 10B, according to an embodiment, the electronic device 101 may receive a gesture input 1020 indicating rotation. The gesture input 1020 indicating the rotation may be a drag input in a two-dimensional plane. Based on receiving the gesture input 1020 indicating the rotation, a position of the first light object 921, a position of the second light object 922, and a position of the third light object 923 within the virtual circle 920 of the electronic device 101 may be changed. For example, in response to the gesture input 1020 indicating the rotation, each of the first light object 921, the second light object 922, and the third light object 923 may rotate around the center of the virtual circle 920. As a position of a light object changes, an area to which a virtual light is applied may change. For example, an area of the object (e.g., a person) within the image, before the rotation, may be closest to the first light object 921 among a plurality of light objects. A color of the area may be the same as a color of the first light object 921, or may have a value within a certain range based on a color value of the first light object 921. The area may be closest to the third light object 923 among the plurality of light objects, after the rotation. A color of the area may be changed to be identical with a color of the third light object 923 or to have a value within a certain range based on a color value of the third light object 923.

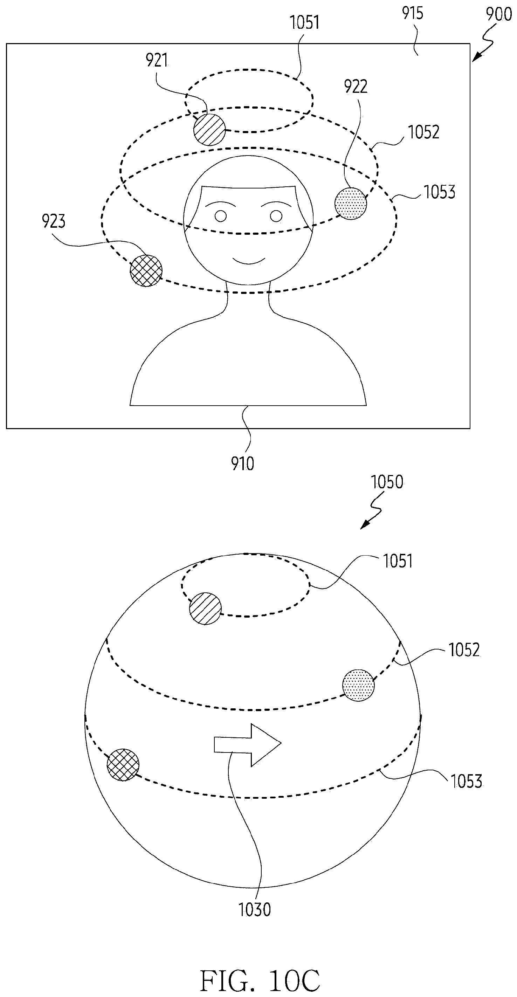

Referring to FIG. 10C, the electronic device 101 may receive a gesture input 1030 indicating rotation. The gesture input 1030 indicating the rotation may be a drag input in a three-dimensional space. Based on receiving the gesture input 1030 indicating the rotation, a position of the first light object 921, a position of the second light object 922, and a position of the third light object 923 of the electronic device 101 may be changed. For example, in response to the gesture input 1030 indicating the rotation, each of the first light object 921, the second light object 922, and the third light object 923 may rotate around a central axis of a virtual sphere 1050. In response to the gesture input 1030 indicating the rotation, the first light object 921 may rotate along a first virtual circle 1051 of the virtual sphere 1050. In response to the gesture input 1030 indicating the rotation, the second light object 922 may rotate along a second virtual circle 1052 of the virtual sphere 1050. In response to the gesture input 1030 indicating the rotation, the third light object 923 may rotate along a third virtual circle 1053 of the virtual sphere 1050. As a position of a light object changes, an area to which a virtual light is applied may change. At this time, since the light object moves in a three-dimensional space, the electronic device 101 may change a color and brightness of the object according to the virtual light based on a depth map.

In FIG. 10C, an example has been described in which the first light object 921 rotates along the first virtual circle 1051, the second light object 922 rotates along the first virtual circle 1052, and the third light object 923 rotates along the third virtual circle 1053, by a single user input, with respect to the virtual space 1050. However, embodiments of the present disclosure are not limited thereto. By selecting each light object and using a gesture indicating a rotation of the light object, only the selected light object may be rotated. For example, the electronic device 101 may identify the second light object 922 based on the received user input. The electronic device 101, in response to the gesture input 1030 indicating the rotation, only the second light object 922 may rotate along the second virtual circle 1052. In response to the gesture input 1030 indicating the rotation, other light objects (e.g., the first light object 921 and the third light object 923) may not move.

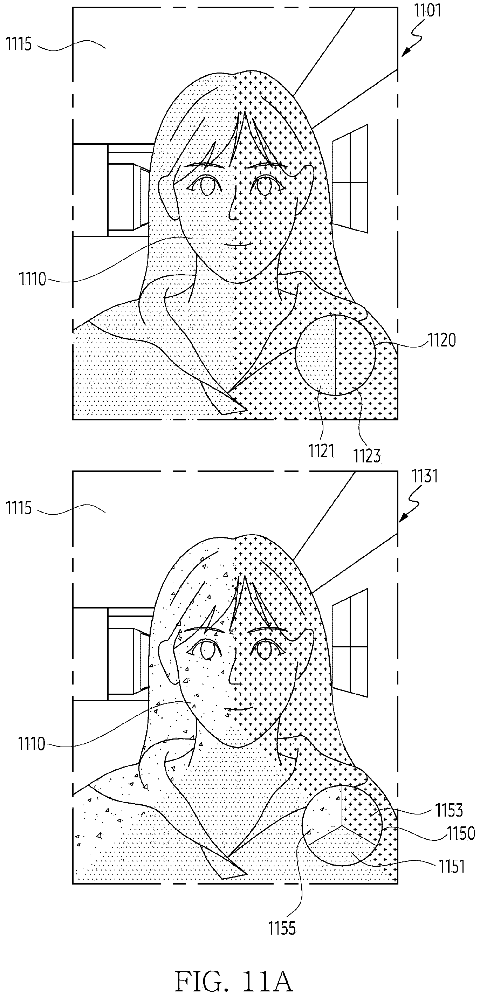

FIGS. 11A to 11B illustrate other examples of adjusting a plurality of virtual lights according to an embodiment.

Referring to FIG. 11A, an electronic device 101 may display an output image 1101. For example, the electronic device 101 may obtain an image via a camera. The electronic device 101 may determine to apply two virtual lights to the image. For example, based on the determination to apply two virtual lights to the image, virtual lights may be automatically positioned on the left side and the right side of the center of the image, respectively. Based on the center of the image, a first virtual light may be positioned on the left side, and a second virtual light may be positioned on the right side. The electronic device 101 may display the output image 1101 by applying effects by the first virtual light and the second virtual light. The electronic device 101 may display a control object 1120 superimposed on the output image 1101. For example, the control object 1120 may have a shape of a circle. The control object 1120 may include a part 1121 for the first virtual light and a part 1123 for the second virtual light. The part 1121 for the first virtual light within the circle may indicate an area corresponding to a position where the first virtual light is disposed among areas of an object 1110 of the output image 1101. For example, as the first virtual light is disposed on the left side, the first virtual light may face from the left side to the right side. In at least a portion of the area of the object 1110, the first virtual light may be superimposed or be mixed with another virtual light (e.g., the second virtual light). The part 1123 for the second virtual light within the circle may indicate an area corresponding to a position where the second virtual light is disposed among the areas of the object 1110 of the output image 1101. For example, as the second virtual light is disposed on the left side, the second virtual light may face from the left side to the right side. In at least a portion of the area of the object 1110, the second virtual light may be superimposed or be mixed with another virtual light (e.g., the first virtual light).

The electronic device 101 may add a virtual light based on an input of a user. The electronic device 101 may additionally provide an effect of a third virtual light in addition to the effect of the first virtual light and the second virtual light. The electronic device 101 may display an output image 1131 based on the first virtual light, the second virtual light, and the third virtual light. The electronic device 101 may display a control object 1150 superimposed on the output image 1131. The control object 1150 may include a part 1151 for the first virtual light, a part 1153 for the second virtual light, and a part 1155 for the third virtual light. The part 1151 for the first virtual light within the circle may indicate an area to which the effect of the first virtual light is applied, among areas of the object 1110 of the output image 1131. The part 1153 for second virtual light within the circle may indicate an area to which the effect of the second virtual light is applied, among the areas of the object 1110 of the output image 1131. The part 1155 for the third virtual light within the circle may indicate an area to which the effect of the third virtual light is applied among the areas of the object 1110 of the output image 1131.

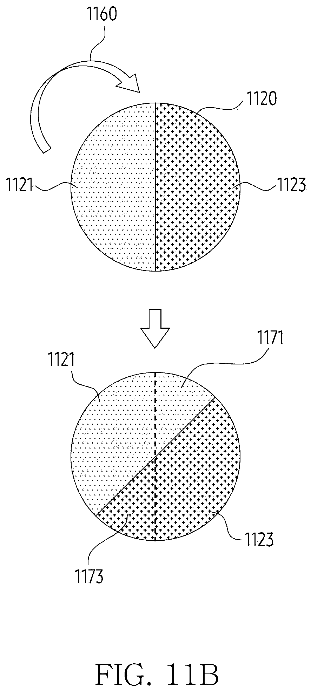

Referring to FIG. 11B, the electronic device 101 may receive a gesture input 1160 indicating rotation on a circular control object (e.g., a control object 1120 and the control object 1150). The electronic device 101 may rotate, based on receiving the gesture input 1160 indicating the rotation, a part 1121 for the first virtual light and a part 1123 for the second virtual light.

As a position of a part for each virtual light within the control object 1120 changes, an area to which a corresponding virtual light is applied may change. For example, the part 1121 for the first virtual light may be tilted about 45 degrees clockwise. The part 1123 for the second virtual light may also be tilted about 45 degrees clockwise. A first control area 1171 may be changed from an area by the second virtual light to an area by the first virtual light. Relative to the entire circle, the first control area 1171 may correspond to at least a portion of an object area, based on the center of an object (e.g., the object 1110) within the image. A color and brightness of the at least a portion of the object area may be changed based on color information and bright information of the first virtual light. A second control area 1173 may be changed from the area by the first virtual light to the area by the second virtual light. Relative to the entire circle, the second control area 1173 may correspond to at least another portion of the object area, based on the center of the object (e.g., the object 1110) within the image. A color and brightness of the at least another portion of the object area may be changed based on color information and bright information of the second virtual light.

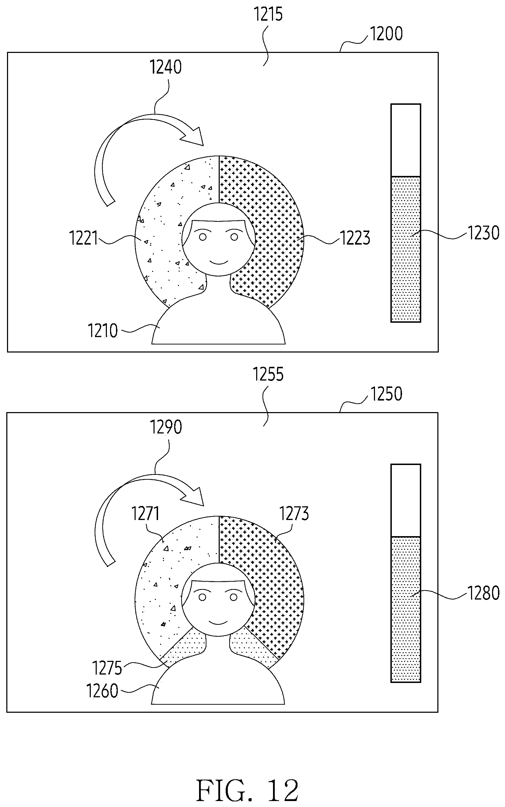

FIG. 12 illustrates an example of adding a virtual light according to an embodiment.

Referring to FIG. 12, an electronic device 101 may display an output image 1200. Based on segmentation information of an object 1210 (e.g., a person) and a background 1215, the electronic device 101 may provide a control object 1220 between the object 1210 and the background 1215. The electronic device 101 may display the control object 1220 on the output image 1200 via an augmented reality (AR) technique. For example, the control object 1220 may have a circular shape. The control object 1220 may be positioned at the center of the object 1210 (e.g., the person) of the output image 1200. The control object 1220 may be disposed behind the object 1210 and may not obscure the object 1210. Meanwhile, the control object 1220 may be disposed in front of a partial area of the background 1215. According to an embodiment, the control object 1220 may be disposed to obscure the partial area of the background 1215 by being displayed opaque. In addition, according to an embodiment, the control object 1220 may be disposed such that the partial area of the background 1215 is visible within an area of the control object 1220 by being displayed translucently. The control object 1220 may include a part 1121 for a first virtual light and a part 1123 for a second virtual light. In addition, according to an embodiment, the electronic device 101 may display a control bar 1230 together with the control object 1220. The electronic device 101 may display the control bar 1230 in the partial area of the background 1215 within the image 1200. The control bar 1230 may provide a UX for adjusting an intensity of brightness of a virtual light.

When two colors are selected, the electronic device 101 may determine to apply two virtual lights to the image. According to an embodiment, when two colors are selected, a position of each virtual light may be automatically determined. For example, the electronic device 101 may determine to apply the first virtual light to the left area and the second virtual light to the right area based on the center of the object 1210. As described with reference to FIGS. 11A to 11B, the electronic device 101, based on receiving a gesture input 1240 indicating rotation, may rotate a part 1221 for the first virtual light and a part 1223 for the second virtual light. As a position of a part for each virtual light within the control object 1220 changes, an area to which a corresponding virtual light is applied may change.

To control three virtual lights, the electronic device 101 may display a control object 1270 on an output image 1250. The electronic device 101 may provide the control object 1270 between an object 1260 and a background 1265 based on segmentation information of the object 1260 and the background 1265. For example, the control object 1270 may have a circular shape. The control object 1270 may be positioned at the center of the object 1260 (e.g., a person) of the output image 1250. The control object 1270 may include a part 1271 for the first virtual light, a part 1272 for the second virtual light, and a part 1273 for the third virtual light. In addition, according to an embodiment, the electronic device 101 may display a control bar 1280 together with the control object 1270. The electronic device 101 may display the control bar 1280 in a partial area of the background area 1265 within the image 1250. The control bar 1280 may provide a UX for adjusting the intensity of brightness of the virtual light.

When three colors are selected, the electronic device 101 may determine to apply three virtual lights to the image. According to an embodiment, when three colors are selected, a position of each virtual light may be automatically determined. For example, based on the center of the object 1260, the electronic device 101 may determine to apply the first virtual light to a first area (e.g., in a polar coordinate system, an area from about 90 degrees to about -30 degrees in the clockwise direction) of three divided areas, the second virtual light to a second area (e.g., in the polar coordinate system, an area from about -30 degrees to about -150 degrees in the clockwise direction) of the three divided areas, and the third virtual light to a third area (e.g., in the polar coordinate system, an area from about -150 degrees to about 90 degrees in the clockwise direction) of the three divided areas.

The electronic device 101, based on receiving a gesture input 1290 indicating rotation, may rotate the part 1271 for the first virtual light, the part 1273 for the second virtual light, and the part 1275 for the third virtual light. As a position of a part for each virtual light within the control object 1220 changes, an area to which a corresponding virtual light is applied may change.

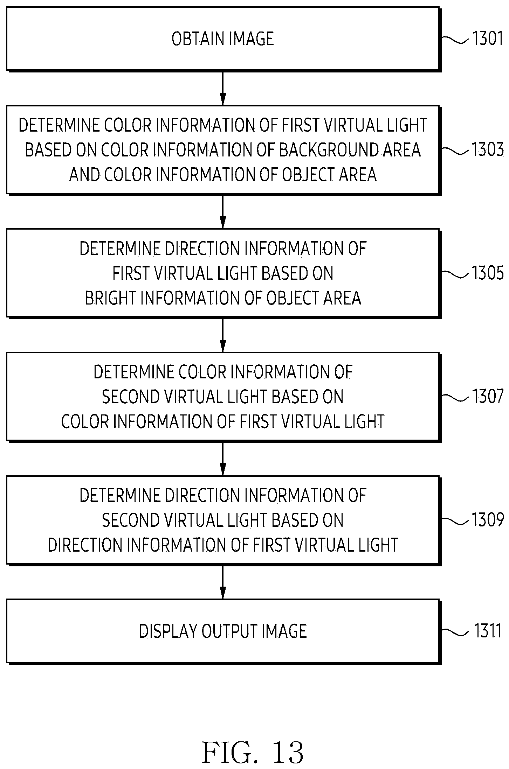

FIG. 13 illustrates an operation flow of an electronic device (e.g., the electronic device 101) for displaying an output image for a plurality of virtual lights according to an embodiment.

Referring to FIG. 13, in operation 1301, the electronic device 101 may obtain an image. The electronic device 101 may obtain the image via a camera (e.g., the camera module 180). According to an embodiment, the electronic device 101 may obtain a depth map for the image. According to an embodiment, the electronic device 101 may identify an object area and a background area in the image, respectively. According to an embodiment, the electronic device 101 may detect an object within the object area.

In operation 1303, the electronic device 101 may determine color information of a first virtual light based on color information of the background area and color information of the object area. The electronic device 101 may identify the color information of the background area. The electronic device 101 may identify the color information of the object area. The electronic device 101 may determine a default color. According to an embodiment, the default color may be determined based on a color of a light currently applied within the image, a color of a person (e.g., a color of clothes) within the object area, and a color of the background area. The electronic device 101 may determine the color information of the first virtual light with the default color.

In operation 1305, the electronic device 101 may determine direction information of the first virtual light based on bright information of the object area. The electronic device 101 may identify the bright information of the object area. The electronic device 101 may determine a default direction. According to an embodiment, the default direction may be determined based on a characteristic (e.g., an amount of the light, and a direction of the light) of a light of the person that is actually being applied and a characteristic (e.g., a position of the virtual light, a strength of brightness of the virtual light, and a radiation direction of the virtual light) of a virtual light. The electronic device 101 may determine the direction information of the first virtual light with the default direction.

In operation 1307, the electronic device 101 may determine color information of a second virtual light based on the color information of the first virtual light. According to an embodiment, the electronic device 101 may determine the color information of the second virtual light to have a color range different from a color range of the first virtual light. For example, the electronic device 101 may determine the color information of the second virtual light to have a color corresponding to a complementary color of the color information of the first virtual light.

In operation 1309, the electronic device 101 may determine direction information of the second virtual light based on the direction information of the first virtual light. According to an embodiment, the electronic device 101 may determine the direction information of the second virtual light to have a direction different from the direction information of the first virtual light. For example, the electronic device 101 may determine direction information of the second virtual light to face a direction opposite to the direction information of the first virtual light. For another example, the electronic device 101 may determine the direction information of the second virtual light such that the direction information of the first virtual light and the direction information of the second virtual light are symmetrical to each other, based on the object within the image.

In operation 1311, the electronic device 101 may display the output image. The electronic device 101 may display the output image, based on the color information of the first virtual light, the direction information of the first virtual light, the color information of the second virtual light, and the direction information of the second virtual light.

According to an embodiment, the electronic device 101 may change color and brightness of a first area of the object area of the image based on the color information of the first virtual light and the direction information of the first virtual light. The electronic device 101 may apply a light effect to the background area based on the light effect applied to the object area. For the light effect to be applied to the background area, the description of FIG. 5 may be referred to. The electronic device 101 may identify a first part to which the light effect will be applied in within the background area according to the first virtual light, based on a depth map. The electronic device 101 may change a color and brightness of the first part based on the color information and the direction information of the first virtual light.

According to an embodiment, the electronic device 101 may change a color and brightness of a second area of the object area of the image based on the color information of the second virtual light and the direction information of the second virtual light. The electronic device 101 may apply a light effect to the background area based on the light effect applied to the object area. For the light effect to be applied to the background area, the description of FIG. 5 may be referred to. The electronic device 101 may identify the second part to which the light effect will be applied within the background area according to the second virtual light, based on the depth map. The electronic device 101 may change a color and brightness of the second part based on the color information and the direction information of the second virtual light.

According to an embodiment, the electronic device 101 may obtain a light effect according to the first virtual light and image information of the object area to which the light effect according to the first virtual light is applied. The electronic device 101 may obtain the light effect according to the first virtual light and image information of the background area to which the light effect according to the first virtual light is applied. The electronic device 101 may generate the output image based on the image information of the object area and the image information of the background area. The electronic device 101 may display the generated output image via a display (e.g., the display module 160).

Although a portion operations are described as being performed sequentially in FIG. 13, embodiments of the present disclosure may not be limited thereto. For example, the electronic device 101 may perform the operation 1309 before the operation 1307 or perform them in parallel.

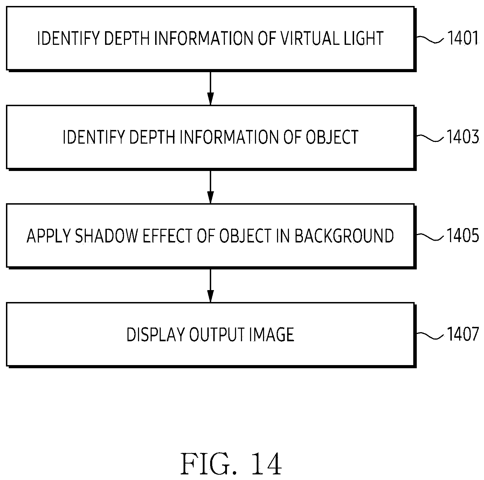

FIG. 14 illustrates an operation flow of an electronic device (e.g., the electronic device 101) for indicating a shadow effect according to an embodiment.

Referring to FIG. 14, in operation 1401, the electronic device 101 may identify depth information of a virtual light. The electronic device 101 may identify a position of the virtual light based on a depth map.

In operation 1403, the electronic device 101 may identify depth information of an object. The electronic device 101 may detect the object (e.g., a person) within an object area of an image. The electronic device 101 may identify the depth information of the object based on the depth map.

In operation 1405, the electronic device 101 may apply the shadow effect of the object. According to an embodiment, the electronic device 101 may obtain information on a direction (hereinafter, a light source direction) from the virtual light to the object based on the depth information of the virtual light and the depth information of the object. The electronic device 101 may change color and brightness of at least a portion of the background area within the image so that a shadow is represented in a direction opposite to the light source direction. The at least a portion of the background area may be referred to as a shadow area. The electronic device 101 may identify the shadow area, based on the depth information of the virtual light and the depth information of the object. For example, the electronic device 101 may adjust brightness of the shadow area to become darker. In addition, for example, the electronic device 101 may adjust color of the shadow area so that the color of the shadow area becomes closer to black. The electronic device 101 may apply the shadow effect so that brightness of a corresponding area becomes darker as it is an area that gets closer to the object among the shadow area. According to an additional embodiment, the electronic device 101 may adjust the light source direction based on direction information of the virtual light.

In operation 1407, the electronic device 101 may display an output image. The output image may include an area to which the shadow effect is additionally applied , in addition to a light effect.

Although a portion of operations are described as being performed sequentially in FIG. 14, embodiments of the present disclosure may not be limited thereto. For example, the electronic device 101 may perform the operation 1403 before the operation 1401 or perform them in parallel.

By applying color and an effect to each of a plurality of virtual lights to the image according to the characteristics of the object (e.g., the person) and the background within the image, an overall harmonious virtual light effect may be provided. In addition, the electronic device 101 according to the embodiments, via intuitive control, may effectively adjust several virtual lights with various colors. Adjustment of parameters such as the number, a color, a strength, and a direction of a light source may be provided in various ways.

According to embodiments, an electronic device (e.g., the electronic device 101) may comprise a display (e.g., the display module 160), at least one camera (e.g., the camera module 180), memory (e.g., the memory 130) configured to store instructions, and at least one processor (e.g., the processor 120) operably coupled with the at least one camera, the display, and the memory. The at least one processor, when the instructions are executed, may be configured to perform operations according to embodiments. The at least one processor may be configured to obtain an image via the at least one camera. The at least one processor may be configured to identify, based on color information of a background area within the image and color information of an object area within the image, color information of a first virtual light. The at least one processor may be configured to identify, based on bright information of the object area within the image, direction information of the first virtual light. The at least one processor may be configured to identify, based on the direction information of the first virtual light, direction information of the second virtual light. The at least one processor may be configured to identify, based on the color information of the first virtual light, color information of the second virtual light. The at least one processor may be configured to display, based on the color information of the first virtual light, the direction information of the first virtual light, the color information of the second virtual light, and the direction information of the second virtual light, an output image.

According to an embodiment, the direction information of the first virtual light may indicate the darkest area among a plurality of areas within the object area in a case that a lightness of the color information of the first virtual light is greater than or equal to a threshold value. The direction information of the first virtual light may indicate the brightest area among the plurality of areas within the object area in a case that the lightness of the color information of the first virtual light is less than the threshold value.

According to an embodiment, a position of the second virtual light may be determined to be symmetrical with a position of the first virtual light, based on the object area.

According to an embodiment, the at least one processor may be configured, for displaying the output image, to change, based on the direction information of the first virtual light, the color information of the first virtual light, and a depth map, color and brightness of at least a portion of the object area. The at least one processor may be configured, for displaying the output image, to change, based on the direction information of the second virtual light, the color information of the second virtual light, and the depth map, color and brightness of at least another portion of the object area.

According to an embodiment, the at least one processor may be configured, for displaying the output image, to change, based on the direction information of the first virtual light, the color information of the first virtual light, and a depth map, color and brightness of at least a portion of the background area. The at least one processor may be configured, for displaying the output image, to change, based on the direction information of the second virtual light, the color information of the second virtual light, and the depth map, color and brightness of at least another portion of the background area.

According to an embodiment, the at least one processor may be configured to receive an input of a user for indicating specific virtual background among a plurality of virtual backgrounds. The at least one processor may be configured to generate, based on the specific virtual background and a background of the background area, a mixed background. The at least one processor may be configured to display the mixed background on the background area within the image. The color information of the first virtual light may be identified based on color information of the specific virtual background. Based on the color information of the specific virtual background, in addition to the color information of the first virtual light, additional virtual lights may be identified. The additional virtual lights may be determined based on one or more colors used in the specific virtual background and information on a direction of a light in the specific virtual background.

According to an embodiment, color values of a first part of the object area within the output image may be determined based on a color value of the color information of the first virtual light. Color values of a second part of the object area within the output image may be determined based on color value of the color information of the second virtual light. The first part and the second part may overlap. An area where the first part and the second part overlap may be determined based on color value of color information of the first virtual light and color value of color information of the second virtual light.

According to an embodiment, the at least one processor may be configured to, in response to a gesture input for zoom-in, adjust a position of the first virtual light within the image and a position of the second virtual light within the image so that a gap between the first virtual light and the second virtual light within the image decreases. The at least one processor may be configured to, in response to a gesture input for zoom-out, adjust the position of the first virtual light within the image and the position of the second virtual light within the image so that the gap between the first virtual light and the second virtual light within the image increases.

According to an embodiment, the at least one processor may be configured to display, via the display, a control object or a control bar for the first virtual light and the second virtual light. The at least one processor may be configured to, in response to receiving a gesture input for rotating the control object, rotate a position of the first virtual light and a position of the second virtual light within the image in accordance with a direction of the gesture input. The at least one processor may be configured to, in response to receiving a slide input of the control bar, increase or decrease intensity of brightness of the first virtual light and intensity of brightness of the second virtual light.

According to an embodiment, the at least one processor may be configured to, in response to receiving a user input for adding a virtual light, identify color information of a third virtual light. The at least one processor may be configured to, based on the direction information of the first virtual light, adjust the direction information of the second virtual light and identify direction information of the third virtual light. The at least one processor may be configured to display, based on the color information of the first virtual light, the direction information of the first virtual light, the color information of the second virtual light, the direction information of the second virtual light, the color information of the third virtual light, and the direction information of the third virtual light, another output image.

According to embodiments, a method performed by an electronic device (e.g., the electronic device 101) may comprise obtaining an image via at least one camera (e.g., the camera 180). The method may comprise identifying, based on color information of a background area within the image and color information of an object area within the image, color information of a first virtual light. The method may comprise identifying, based on bright information of the object area within the image, direction information of the first virtual light. The method may comprise identifying, based on the direction information of the first virtual light, direction information of the second virtual light. The method may comprise identifying, based on the color information of the first virtual light, color information of the second virtual light. The method may comprise displaying, based on the color information of the first virtual light, the direction information of the first virtual light, the color information of the second virtual light, and the direction information of the second virtual light, an output image.

According to an embodiment, the direction information of the first virtual light may indicate the darkest area among a plurality of areas within the object area in a case that a lightness of the color information of the first virtual light is greater than or equal to a threshold value. The direction information of the first virtual light may indicate the brightest area among the plurality of areas within the object area in a case that the lightness of the color information of the first virtual light is less than the threshold value.

According to an embodiment, a position of the second virtual light may be determined to be symmetrical with a position of the first virtual light, based on the object area.

According to an embodiment, the displaying the output image may comprise changing, based on the direction information of the first virtual light, the color information of the first virtual light, and a depth map, color and brightness of at least a portion of the object area. The displaying the output image may comprise changing, based on the direction information of the second virtual light, the color information of the second virtual light, and the depth map, color and brightness of at least another portion of the object area.

According to an embodiment, the displaying the output image may comprise changing, based on the direction information of the first virtual light, the color information of the first virtual light, and a depth map, color and brightness of at least a portion of the background area. The displaying the output image may comprise changing, based on the direction information of the second virtual light, the color information of the second virtual light, and the depth map, color and brightness of at least another portion of the background area.

According to an embodiment, the method may comprise receiving an input of a user for indicating a specific virtual background among a plurality of virtual backgrounds. The method may comprise generating, based on the specific virtual background and a background of the background area, a mixed background. The method may comprise displaying the mixed background on the background area within the image. The color information of the first virtual light may be identified based on color information of the specific virtual background. Based on the color information of the specific virtual background, , additional virtual lights may be identified in addition to the color information of the first virtual light. The additional virtual lights may be determined based on one or more colors used in the specific virtual background and information on a direction of a light in the specific virtual background.

According to an embodiment, color values of a first part of the object area within the output image may be determined based on a color value of the color information of the first virtual light. Color values of a second part of the object area within the output image may be determined based on color value of the color information of the second virtual light. The first part and the second part may overlap. An area where the first part and the second part overlap may be determined based on color value of color information of the first virtual light and color value of color information of the second virtual light.

According to an embodiment, the method may comprise, in response to a gesture input for zoom-in, adjusting a position of the first virtual light within the image and a position of the second virtual light within the image so that a gap between the first virtual light and the second virtual light within the image decreases. The method may comprise, in response to a gesture input for zoom-out, adjusting the position of the first virtual light within the image and the position of the second virtual light within the image so that the gap between the first virtual light and the second virtual light within the image increases.

According to an embodiment, the method may comprise displaying, via a display (e.g., the display module 160), a control object or a control bar for the first virtual light and the second virtual light. The method may comprise, in response to receiving a gesture input for rotating the control object, rotating a position of the first virtual light and a position of the second virtual light within the image in accordance with a direction of the gesture input. The method may comprise, in response to receiving a slide input of the control bar, increasing or decreasing intensity of brightness of the first virtual light and intensity of brightness of the second virtual light.

According to an embodiment, the method may comprise, in response to receiving a user input for adding a virtual light, identifying color information of a third virtual light. The method may comprise, based on the direction information of the first virtual light, adjusting the direction information of the second virtual light and identifying direction information of the third virtual light. The method may comprise displaying, based on the color information of the first virtual light, the direction information of the first virtual light, the color information of the second virtual light, the direction information of the second virtual light, the color information of the third virtual light, and the direction information of the third virtual light, another output image.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. An electronic device comprising:
a display;
at least one camera;
memory configured to store instructions; and
at least one processor operably coupled with the at least one camera, the display, and the memory,
wherein the at least one processor, when the instructions are executed, is configured to:
obtain an image via the at least one camera,
identify, based on color information of a background area within the image and color information of an object area within the image, color information of a first virtual light,
identify, based on bright information of the object area within the image, direction information of the first virtual light,
identify, based on the direction information of the first virtual light, direction information of the second virtual light,
identify, based on the color information of the first virtual light, color information of the second virtual light, and
display, based on the color information of the first virtual light, the direction information of the first virtual light, the color information of the second virtual light, and the direction information of the second virtual light, an output image.

2. The electronic device of claim 1, wherein the direction information of the first virtual light indicates the darkest area among a plurality of areas within the object area in a case that a lightness of the color information of the first virtual light is greater than or equal to a threshold value, and
wherein the direction information of the first virtual light indicates the brightest area among the plurality of areas within the object area in a case that the lightness of the color information of the first virtual light is less than the threshold value.

3. The electronic device of any one of claim 1 or 2, wherein a position of the second virtual light is determined to be symmetrical with a position of the first virtual light, based on the object area.

4. The electronic device of any one of claims 1 to 3, wherein the at least one processor is configured, for displaying the output image, to:
change, based on the direction information of the first virtual light, the color information of the first virtual light, and a depth map, color and brightness of at least a portion of the object area, and
change, based on the direction information of the second virtual light, the color information of the second virtual light, and the depth map, color and brightness of at least another portion of the object area.

5. The electronic device of claim 4, wherein the at least one processor is configured, for displaying the output image, to:
change, based on the direction information of the first virtual light, the color information of the first virtual light, and a depth map, color and brightness of at least a portion of the background area, and
change, based on the direction information of the second virtual light, the color information of the second virtual light, and the depth map, color and brightness of at least another portion of the background area.

6. The electronic device of any one of claims 1 to 5, wherein the at least one processor is further configured to:
receive an input of a user for indicating a specific virtual background among a plurality of virtual backgrounds,
generate, based on the specific virtual background and a background of the background area, a mixed background,
display the mixed background on the background area within the image; and
wherein the color information of the first virtual light is identified based on color information of the specific virtual background.

7. The electronic device of any one of claims 1 to 6, wherein color values of a first part of the object area within the output image are determined based on a color value of the color information of the first virtual light, and
wherein color values of a second part of the object area within the output image are determined based on a color value of the color information of the second virtual light.

8. The electronic device of any one of claims 1 to 7, wherein the at least one processor is further configured to:
in response to a gesture input for zoom-in, adjust a position of the first virtual light within the image and a position of the second virtual light within the image so that a gap between the first virtual light and the second virtual light within the image decreases, and
in response to a gesture input for zoom-out, adjust the position of the first virtual light within the image and the position of the second virtual light within the image so that the gap between the first virtual light and the second virtual light within the image increases.

9. The electronic device of any one of claims 1 to 8, wherein the at least one processor is further configured to:
display, via the display, a control object or a control bar for the first virtual light and the second virtual light, and
in response to receiving a gesture input for rotating the control object, rotate a position of the first virtual light and a position of the second virtual light within the image according to a direction of the gesture input, or
in response to receiving a slide input of the control bar, increase or decrease intensity of brightness of the first virtual light and intensity of brightness of the second virtual light.

10. The electronic device of any one of claims 1 to 9, wherein the at least one processor is further configured to:
in response to receiving a user input for adding a virtual light, identify color information of a third virtual light,
based on the direction information of the first virtual light, adjust the direction information of the second virtual light and identify direction information of the third virtual light, and
display, based on the color information of the first virtual light, the direction information of the first virtual light, the color information of the second virtual light, the direction information of the second virtual light, the color information of the third virtual light, and the direction information of the third virtual light, another output image.

11. A method performed by an electronic device, comprising:
obtaining an image via at least one camera,
identifying, based on color information of a background area within the image and color information of an object area within the image, color information of a first virtual light,
identifying, based on bright information of the object area within the image, direction information of the first virtual light,
identifying, based on the direction information of the first virtual light, direction information of the second virtual light,
identifying, based on the color information of the first virtual light, color information of the second virtual light, and
displaying, based on the color information of the first virtual light, the direction information of the first virtual light, the color information of the second virtual light, and the direction information of the second virtual light, an output image.

12. The method of claim 11, wherein the direction information of the first virtual light indicates the darkest area among a plurality of areas within the object area in a case that a lightness of the color information of the first virtual light is greater than or equal to a threshold value, and
wherein the direction information of the first virtual light indicates the brightest area among the plurality of areas within the object area in a case that the lightness of the color information of the first virtual light is less than the threshold value.

13. The method of any one of claims **11** to 12, wherein a position of the second virtual light is determined to be symmetrical with a position of the first virtual light, based on the object area.

14. The method of any one of claims **11** to 13, wherein the displaying the output image comprises:
changing, based on the direction information of the first virtual light, the color information of the first virtual light, and a depth map, color and brightness of at least a portion of the object area, and
changing, based on the direction information of the second virtual light, the color information of the second virtual light, and the depth map, color and brightness of at least another portion of the object area.

15. The method of claim 14, wherein the displaying the output image comprises:
changing, based on the direction information of the first virtual light, the color information of the first virtual light, and a depth map, color and brightness of at least a portion of the background area, and
changing, based on the direction information of the second virtual light, the color information of the second virtual light, and the depth map, color and brightness of at least another portion of the background area.
